# EUROPÄISCHE PATENTANMELDUNG

(11) **EP 0 824 124 A1**
(43) Veröffentlichungstag der Anmeldung: **18.02.1998**
(21) Anmeldenummer: 97113813.6
(22) Anmeldetag: 08.08.1997
(51) Int. Cl.: C08G 59/62, C08L 63/00

(54) **Härter für Epoxidharze**

(30) Priorität: 14.08.1996 DE 19632749
(71) Anmelder: Vianova Resins GmbH, 55252 Mainz-Kastel (DE)
(72) Erfinder: Neumann, Uwe, Dr., Mobile, AL 36695 (US); Godau, Claus, 65399 Kiedrich (DE)

(57) **Zusammenfassung**

Aminogruppenhaltige Härtungskomponente (A) für Epoxidharze (B), dadurch gekennzeichnet, daß die Härtungskomponente (A) ein Kondensationsprodukt aus Di- oder Polyhydroxyaromaten (A1) mit Polyaminen (A2) ist.

## Beschreibung

Die vorliegende Erfindung betrifft eine Härtungskomponente für Epoxidharze, ein Verfahren zu ihrer Herstellung, sowie deren Verwendung in härtbaren Mischungen.

Es ist bekannt, daß Alkohole, insbesondere Phenol oder alkylierte Phenole die Härtungsreaktion zwischen Oxiranen und Aminogruppen beschleunigen (vgl. US-A 3.366.600, EP-B 0 114 875, DE-C 10 43 629 und DE-C 20 25 343). Dabei hat es sich als vorteilhaft erwiesen, die Phenolkomponente zusammen mit der Aminkomponente in einem Molekül zu vereinigen. In DE-C 15 43 754 wird dazu eine Hydroxyaryl-substituierte aliphatische Carbonsäure mit einem Polyamin über eine Amidbindung verknüpft. Bei diesem Verfahren geht jedoch eine Aminogruppe des Polyamins, die für die Amidbindung benötigt wird, für den Härtungsvorgang verloren. In der DE-A 32 33 565 und EP-A 0 114 875 wird daher als Härtungskomponente das Reaktionsprodukt einer Mannich-Reaktion von Aldehyden und Polyaminen mit Phenol oder Alkylphenolen, beispielsweise Kresolen, p-tert-Butylphenol oder Nonylphenol vorgeschlagen, in der EP-A 0 066 447 auch Reaktionsprodukte mit Arylphenolen, beispielsweise Benzylphenol.

Aus der US-A 2 974 121 sind auch Addukte von Phenolen mit Polyaminen bekannt, die zum Harten von Epoxidharzen verwendet werden, insbesondere für die Anwendung als Beschichtung. Die geeigneten Polyamine haben weder weniger als eine noch mehr als zwei Aminogruppen pro Molekül, wobei die Aminogruppen jeweils mit einem aliphatischen Kohlenstoffatom verbunden sind. Bevorzugt werden Epoxid-Amin-Addukte. Die geeigneten Phenole haben jeweils mindestens eine Monohydroxyphenylgruppe pro Molekül. Phenole, die ausschließlich Polyhydroxyphenylgruppen aufweisen, wie Resorcin, Hydrochinon und Phloroglucin, ergeben Beschichtungen mit matten Oberflachen, und sind für diese Erfindung nutzlos. Die Bildung der Addukte erfolgt durch Erwärmen ohne Zusatz von Katalysatoren auf Temperaturen zwischen 4 und 104 °C, bevorzugt bis zu 52 °C. Die Addukte sind Salze des sauren Phenols mit dem Amin; das Salz liegt in einem Gleichgewicht vor, wobei das Phenol während der (das Amin verbrauchenden) Härtungsreaktion wieder freigesetzt wird.

Diese Kombinationen haben sich durchaus gut bewährt, zeigen jedoch auch Nachteile, wie zum Teil mangelnde Beschleunigung bei tiefen Temperaturen (≤ 10 °C) und bei hoher Luftfeuchtigkeit, sowie mangelnde Beständigkeit gegen verdünnte organische Säuren, wie z.B. Essigsäure. Da in allen diesen Kombinationen Phenol oder alkylierte Phenole enthalten sind, sind sie zudem aus toxikologischer Sicht aufgrund der Gefährdung des Anwenders bei der Applikation nur bedingt einsatzfähig. Darüber hinaus werden die Phenole beispielsweise bei Kontakt mit Nahrungsmitteln durch die darin enthaltenen wäßrig-verdünnten organischen Säuren wie Essigsäure, Weinsäure oder Zitronensäure leicht aus der Beschichtung extrahiert und verderben das Nahrungsmittel.

In DE-C 10 43 629 sind neben den üblichen phenolischen Komponenten auch mehrwertige Phenole als mögliche Reaktanden für durch Mannich-Reaktion herstellbare Härtungskomponenten genannt. Verbindungen wie Resorcin und Hydrochinon liefern aufgrund ihrer hohen Reaktivität aber stark vernetzte Mannich-Basen mit unerwünscht hoher Viskosität. Die gegenüber den einwertigen phenolischen Komponenten erhöhte Polarität der mehrwertigen Phenole verursacht darüber hinaus ein stärkeres Weißanlaufen der aus ihnen hergestellten Beschichtungen zum Beispiel bei Wasseraufnahme (Einwirkung von Feuchtigkeit).

Es besteht daher das Bedürfnis nach Härtungssystemen für Epoxidharze, deren beschleunigend wirkende Gruppe zu einem hohen Anteil in das Netzwerk eingebaut werden, so daß ihre Extraktion durch wäßrig-verdünnte organische Säuren weitgehend vermieden wird und die darüber hinaus auch bei tiefen Temperaturen und hoher Luftfeuchtigkeit genügend reaktiv sind. Die gesuchten Härtungssysteme sollen weiterhin die Probleme vermeiden, die insbesondere beim Beschichten bei tiefen Temperaturen und hoher Luftfeuchtigkeit auftreten, wie Weißanlaufen, schmierigen Oberflächen und ungenügende Vernetzung.

Gegenstand der Erfindung ist eine aminogruppenhaltige Härtungskomponente (A) für Verbindungen (B), die Oxirangruppen enthalten, üblicherweise als Epoxidharz bezeichnet, dadurch gekennzeichnet, daß die Härtungskomponente (A) ein Kondensationsprodukt aus Di- oder Polyhydroxyaromaten (A1) mit Polyaminen (A2) ist.

Weiterhin betrifft die Erfindung härtbare Mischungen (C), welche neben den Epoxidharzen (B) die Härtungskomponente (A) enthalten, sowie die Verwendung dieser Härtungskomponente (A) in härtbaren Mischungen (C), insbesondere Lackzubereitungen.

Bei der erfindungsgemäßen Härtungskomponente (A) handelt es sich um ein Polymer, welches aus einem Di- oder Polyhydroxyaromaten (A1) mit einem Polyamin (A2) nach dem Mechanismus der Bucherer-Reaktion hergestellt wird. Die Bucherer-Reaktion ist ursprünglich der reversible Austausch von Hydroxyl- in Aminogruppen am aromatischen Ringsystemen unter Sulfit-Katalyse (H. T. Bucherer, J. prakt. Chemie 69, (1904) S. 40 ff.).

Technisch genutzt wird diese Reaktion, um in Polyhydroxyaromaten selektiv eine oder mehrere Hydroxylgruppen gegen Aminogruppen auszutauschen. Beschrieben werden solche Verfahren in der Monographie Organic Reactions 1, Kapitel 5, N. L. Drake, 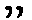 The Bucherer-Reaction", S. 105 bis 125 (1947) und in den Patentschriften DE-C 11 04 522, DE-C 14 43 311, DE-C 21 40 786 und DE-C 22 08 827. Die dort beschriebenen Produkte dienen hauptsächlich als Farbstoffvorprodukte. Ein gezielter Aufbau von Polymeren über die Bucherer-Reaktion ist noch nicht beschrieben worden.

Der Di- oder Polyhydroxyaromat (A1) zeichnet sich dadurch aus, daß er mindestens zwei, bevorzugt zwei oder drei, Hydroxylgruppen aufweist, wobei mindestens zwei seiner Hydroxylgruppen direkt jeweils an einen aromatischen Ring gebunden sind, wie zum Beispiel an einen Benzol- oder Naphthalinring. Die Di- oder Polyhydroxyaromaten können dabei einzeln oder im Gemisch eingesetzt werden.

Die für die Erfindung geeigneten Di- und Polyhydroxyaromaten leiten sich ab von ein- oder mehrkernigen Aromaten, wobei die mehrkernigen Aromaten anellierte Ringe aufweisen können. Geeignet sind auch solche Di- und Polyhydroxyaromaten, bei denen mehrere aromatische Einheiten wie Benzol-, Naphthalin-, Anthracen- oder auch Heteroaromaten-Einheiten verbunden sind mit direkten Kohlenstoff-Kohlenstoff-Bindungen oder durch zweibindige Brücken wie α,ω-Alkylenreste, Alkylenreste, deren beide Bindungsstellen am selben Kohlenstoffatom sind, mit jeweils 1 bis 12 Kohlenstoffatomen im Alkylenrest, der gegebenenfalls auch äthylenisch ungesättigt sein kann wie z.B. cis- oder trans-1,2-Äthendiyl-, sowie Äther-, Thioäther-, Azo-, Carbonamid-, Carbonyl-, Carbonyloxy-, Sulfon- und Sulfoxid-Brücken. Es ist auch möglich Polyhydroxyaromaten einzusetzen, die mindestens zwei Hydroxylgruppen aufweisen, wobei jede der Hydroxylgruppen an einen verschiedenen aromatischen Kern gebunden ist. Beispiele für mehrkernige Polyhydroxyaromaten, bei denen die Hydroxylgruppen an verschiedene aromatischen Kernen gebunden sind, sind 2,2'- und 4,4'-Dihydroxydiphenyl, 2,2'- und 4,4'-Dihydroxydiphenyläther, 2,2'- und 4,4'-Dihydroxydiphenylsulfon, 4,4'-Dihydroxystilben und 4,4'-Dihydroxybenzophenon.

Weitere Beispiele geeigneter Verbindungen sind Hydrochinon, Brenzcatechin, Resorcin, Pyrogallol, Phloroglucin, 1,4- und 1,5-Dihydroxynaphthalin, 2,3-, 2,6 und 2,7-Dihydroxynaphthalin und alkylierte und aralkylierte Di- oder Polyhydroxyaromaten, wie sie z.B. in der Patentanmeldung EP-A 0 698 591 (DE-A 44 36 097) beschrieben worden sind. Bevorzugt sind dabei Di- und Trihydroxyaromaten, insbesondere solche, bei denen sich die Hydroxylgruppen am selben aromatischen Ring befinden. Besonders bevorzugt sind Dihydroxyaromaten, insbesondere Resorcin und substituierte Resorcine, hergestellt nach dem Verfahren dieser Patentanmeldung.

Diese besonders bevorzugten Verbindungen sind ausgewählt aus Resorcin und mindestens einfach substituierten Resorcinen, deren Substituenten ausgewählt sind aus linearen, verzweigten oder cyclischen Alkylgruppen abgeleitet von Olefinen mit 4 bis 16 Kohlenstoffatomen und Aralkylgruppen abgeleitet von Styrol und dessen Homologen wie α-Methylstyrol, den isomeren Vinyltoluolen und deren technischer Mischung, den isomeren Äthylstyrolen, Inden und den halogenierten Styrolen wie Mono- und Dichlorstyrol. Diese substituierten Resorcine werden durch Umsetzung von Resorcin und linearen, verzweigten oder cyclische Olefinen bzw. den genannten Alkenylaromaten im Sinne einer elektrophilen Addition in Gegenwart eines Katalysators enthaltend Oxalsäure und Borsäure im Stoffmengenverhältnis von 1 mol : 5 mol bis 1 mol : 0 mol hergestellt. Besonders bevorzugt ist dabei styrolisiertes Resorcin, das mindestens einen 2-Phenyläthyl-Substituenten aufweist, sowie dessen Mischungen mit unsubstituiertem Resorcin.

Das Polyamin (A2) zeichnet sich dadurch aus, daß es mindestens zwei primäre, jeweils mit einem aliphatischen Kohlenstoffatom verbundene Aminogruppen trägt. Es hat bevorzugt 2 bis 40 Kohlenstoffatome und kann ausgewählt sein aus Polyoxyalkylen-Polyaminen mit 2 bis 4 Kohlenstoffatomen in der Alkylengruppe und einem zahlenmittleren Polymerisationsgrad von 2 bis 100. Insbesondere kann es auch aus linearen, verzweigten oder cyclischen aliphatischen primären Diaminoalkanen mit 2 bis 40 Kohlenstoffatomen ausgewählt sein. Die Amine (A2) können auch ausgewählt sein aus araliphatischen Aminen mit mindestens zwei primären Aminogruppen, die jeweils an einem aliphatischen Kohlenstoffatom gebunden sind. Das Polyamin (A2) kann noch weitere sekundäre oder tertiäre Aminogruppen aufweisen. Bevorzugt sind diprimäre Amine, also Amine mit zwei primären Aminogruppen. Weiterhin kommen auch Polyaminoamide (aus aliphatischen Diaminen und aliphatischen oder aromatischen Dicarbonsäuren) sowie Polyiminoalkylen-Diamine und Polyoxyäthylen-Polyamine, Polyoxypropylen-Polyamine und gemischte Polyoxyäthylen/Polyorypropylen-Polyamine in Frage, oder Amin-Addukte, wie Amin-Epoxidharz-Addukte. Polyamine (A2) können einzeln oder im Gemisch angewendet werden.

Beispiele für geeignete Polyamine sind: 1,2-Diaminoäthan, 1,2-Diaminopropan, 1,3-Diaminopropan, 1,4-Diaminobutan und höhere Homologe, sowie 2-Methyl-1,5-diaminopentan, 1,3-Diaminopentan, 2,2,4-Trimethyl-1,6-diaminohexan und 2,4,4-Trimethyl-1,6-diaminohexan sowie deren technische Mischungen, 1-Amino-3-aminomethyl-3,5,5-trimethyl-cyclohexan, 2,2-Dimethyl-1,3-diaminopropan, 1,3-Bis-(aminomethyl)-cyclohexan, l,2-Diaminocyclohexan, 1,3-Bis-(aminomethyl)-benzol, Bis-(4-amino-cyclohexyl)-methan, Bis-(4-amino-3-methyl-cyclohexyl)-methan, 3-Aza-pentan-1,5-diamin, 4-Aza-heptan-1,7-diamin, 3,6-Diaza-octan-1,8-diamin, 3(4),8(9)-Bis-(aminomethyl)-tricyclo-[5.2.1.0^{2,6}]-decan, 3-Methyl-3-aza-pentan-1,5-diamin, 3,6-Dioxa-octan-1,8-diamin, 3,6,9-Trioxa-undecan-1, 11-diamin, 4,7-Dioxa-decan- 1, 10-diamin, 4,7,10-Trioxatridecan-1,13-diamin, 4-Aminomethyl-1,8-diamino-octan, 2-Butyl-2-äthyl-1,5-diaminopentan sowie Diäthylentriamin, Triäthylentetramin, Pentaäthylentetramin usw. Geeignete Polyoxyalkylenpolyamine sind zum Beispiel unter dem Handelsnamen ®Jeffamine erhältlich, geeignete Polyiminoalkylenpolyamine werden zum Beispiel unter dem Handelsnamen ®Polymin angeboten.

Die Bucherer-Reaktion des Di- oder Polyhydroxyaromaten (A1) mit dem Polyamin (A2) verläuft wie folgt: das Gemisch aus Di- oder Polyhydroxyaromaten (A1), Polyamin (A2), gegebenenfalls ein Schleppmittel (D) und gegebenenfalls ein Katalysator (E) wird auf 150 bis 230 °C unter Abspaltung und gleichzeitigem Abdestillieren von Reaktionswasser erwärmt. Anschließend erfolgt eine Destillation des Schleppmittels und des Restwassers unter vermindertem Druck (typisch 5 bis 20 kPa = 50 bis 200 mbar) bei 100 bis 130 °C. Das Stoffmengenverhältnis der Komponenten (A1) und (A2) beträgt von 10,0 zu 1,0 mol/mol bis 1,0 zu 10,0 mol/mol.

Als Schleppmittel (D) können verwendet werden: alle Kohlenwasserstoffe mit einem Siedepunkt bei Normaldruck über 50 °C, und einem Schmelzpunkt unter 20 °C, die ein Azeotrop mit Wasser bilden wie: Hexan, Cyclohexan, Petroläther, Ligroin, Toluol, Xylol, ®Shellsol-Typen, Hersteller Shell Chemicals, und ®Solvesso-Typen, Hersteller Esso AG (KohlenwasserstoffDestillationsschnitte, die bei der Destillation von Erdöl anfallen; Mischungen von alkylierten AIomaten), sowie Tetrahydronaphthalin und Dekalin, ferner alle Alkohole mit einem Siedepunkt unter 200 °C bei Normaldruck, die ein Azeotrop mit Wasser bilden, und mindestens vier Kohlenstoffatome pro Molekül enthalten. Das Massenverhältnis von Schleppmittel (Kohlenwasserstoff(-gemisch) oder Alkohol(-gemisch)) zum Gemisch aus Di- oder Polyhydroxyaromaten (A1) mit dem Polyamin (A2) beträgt dabei von 1,0 zu 0,1 g/g bis 1,0 zu 10,0 g/g. Es können auch Mischungen aus Kohlenwasserstoffen und Alkoholen eingesetzt werden.

Als Katalysatoren (E) für die oben beschriebene Reaktion kommen in Frage: Alkali- und Erdalkalisulfite, Alkali- und Erdalkalidithionite, Borsäure, Sulfonsäuren wie p-Toluolsulfonsäure oder Naphthylsulfonsäure, Oxalsäure, Jod, sowie Kombinationen von (i) Salzen von aliphatischen Carbonsäuren ausgewählt aus olefinisch ungesättigten und gesättigten linearen, verzweigten und cyclischen Mono- und Di-Carbonsäuren mit 2 bis 40 Kohlenstoffatomen wie Ameisensäure, Oxalsäure, Essigsäure, Propionsäure, natürlichen Fettsäuren, 2-Äthylhexansäure, verzweigten Monocarbonsäuren, die nach dem Verfahren von Koch aus Olefinen gewonnen werden, und die unter dem Namen ®Versatic-Säuren (Shell Chemicals) angeboten werden, zusammen mit (ii) Schwermetallionen abgeleitet von z.B. Eisen, Kobalt, Zinn, Zink, Mangan, Kupfer und Vanadium.

Bezogen auf die Masse des Gemisches aus Di- oder Polyhydroxyaromat (A1) und Polyamin (A2) mit dem Katalysator (E) beträgt der Massenanteil an Katalysator (E) von 0,1 bis 5 %, bevorzugt 0,2 bis 4 %. Es können auch Kombinationen aus oben genannten Katalysatoren verwendet werden.

In der härtbaren Mischung (C) ist die oben beschriebene Härtungskomponente (A) mit einem Massenanteil von 5 bis 90 %, bevorzugt 20 bis 60 % enthalten, der Massenanteil des Epoxidharzes (B) beträgt 95 bis 10 %, bevorzugt 80 bis 40 %.

Die härtbare Mischung (C) wird gegebenenfalls mit Aminen (F) verdünnt, um optimale Härtungseigenschaften einzustellen. In Frage kommen prinzipiell die gleichen Amine, wie sie unter (A2) beschrieben worden sind. Diese Amine (F) sind mit Massenanteilen von 5 bis 90%, bevorzugt von 10 bis 40 % in der härtbaren Mischung (C) enthalten, die dann die Komponenten (A), (B)und (F) enthält. Bevorzugt sind 1,3-Bis-(aminomethyl)-benzol und Trimethylhexan- 1,6-diamin, sowie ein kommerziell erhältliches Gemisch aus 2,2,4-Trimethyl-1,6-diaminohexan und 2,4,4-Trimethyl-1,6-diaminohexan.

Um ein Weißanlaufen der Beschichtungen bei tiefen Temperaturen zu vermeiden, können der härtbaren Mischung (C), wie sie oben beschrieben ist, noch primäre, aliphatische Monoamine (G) zugefügt werden. Solche Monoamine sind z.B. unverzweigte 1-Aminoalkane mit einem vorzugsweise gesättigten Alkylrest aus sechs bis zweiundzwanzig Kohlenstoffatomen. Die höheren Vertreter dieser Verbindungsklasse werden auch Fettamine genannt. Bevorzugt sind Laurylamin, Stearylamin, Palmitylamin und Behenylamin. Aber auch Monoamine mit verzweigten Ketten kommen in Betracht, z.B. 2-Äthyl-hexan-1-amin oder 3,5,5-Trimethyl-hexan-1-amin. Sie können dabei einzeln oder im Gemisch eingesetzt werden und zwar zusammen mit einem Massenanteil von 0,1 bis 10 % bezogen auf die Masse der härtbaren Mischung (C), vorzugsweise 1 bis 5 %.

Die erfindungsgemäße härtbare Mischung (C) kann gegebenenfalls ein Verdünnungsmittel (K) enthalten, das sich in Bezug auf die Reaktion zwischen Amin und Epoxid als inert verhält. Beispielsweise seien hier genannt:
aliphatische lineare, verzweigte oder cyclische Äther mit 4 bis 20 Kohlenstoffatomen und gemischte aliphatisch-aromatische Äther mit 7 bis 20 Kohlenstoffatomen, wie Dibenzyläther, Tetrahydrofuran, 1,2-Dimethoxyäthan oder Methoxybenzol; aliphatische lineare, verzweigte oder cyclische oder gemischt aliphatisch-aromatische Ketone mit 4 bis 20 Kohlenstoffatomen, wie Butanon, Cyclohexanon, Methyl-isobutylketon oder Acetophenon; aliphatische lineare, verzweigte oder cyclische oder gemischt aromatisch-aliphatische Alkohole mit 4 bis 20 Kohlenstoffatomen, wie Methanol, Äthanol, 2-Propanol, Benzylalkohol, Furfurylalkohol; aliphatische lineare, verzweigte oder cyclische oder gemischt aromatisch-aliphatische Kohlenwasserstoffe, wie Toluol, Xylol, Heptan, Gemische aus aliphatischen und aromatischen Kohlenwasserstoffen mit einem Siedebereich über 100°C bei Normaldruck, sowie niedrig viskose Cumaron-Inden-Harze oder Xylol-Formaldehyd-Harze.

Bevorzugt werden dabei aliphatische Alkohole mit einem Phenylrest, wie Benzylalkohol, 1-Phenoxy-propan-2,3-diol, 3-Phenyl-1-propanol, 2-Phenoxy-1-äthanol, 1-Phenoxy-2-propanol, 2-Phenoxy-1-propanol, 2-Phenyläthanol, 1-Phenyl-1-äthanol oder 2-Phenyl-1-propanol. Sie können einzeln oder im Gemisch eingesetzt werden und zwar insgesamt in einem Massenanteil von 1 bis 25 %, bezogen auf die Masse der härtbaren Mischung (C), vorzugsweise von 5 bis 15%.

Als übliche Zusatzstoffe (H), die eventuell in der erfindungsgemäßen härtbaren Mischung vorhanden sein können, seien hier - in Abhängigkeit von dem jeweiligen Verwendungszweck - die üblichen Lackadditive wie Pigmente, Pigmentpasten, Antioxidantien, Verlauf- bzw. Verdickungsmittel, Entschäumer, Katalysatoren, zusätzliche Härter und zusätzliche härtbare Verbindungen genannt. Diese Additive können der Mischung gegebenenfalls erst unmittelbar vor der Verarbeitung zugegeben werden.

Zur Herstellung der erfindungsgemäßen härtbaren Mischungen werden die Komponenten (A) und (B) sowie gegebenenfalls (H) gemischt. Bei Komponenten mit niedriger Viskosität kann dies in Substanz erfolgen, wobei gegebenenfalls auf höhere Temperaturen erwärmt wird. Produkte höherer Viskosität werden vor der Mischung in den erwähnten Verdünnungsmitteln gelöst oder dispergiert.

Jedes bekannte Epoxidharz (B) kann durch die erfindungsgemäße Härtungskomponente gehärtet werden, z.B. solche auf Basis von 2,2-Bis-(4-hydroxyphenyl)-propan, Bis-(hydroxyphenyl)-methan, Polypropylenglykolen, Novolaken aus Phenol, Kresolen, p-tert. Butylphenol, Nonylphenol und Formaldehyd, jedes für sich allein oder im Gemisch, sowie mit sogenannten Reaktiwerdünnern verdünnte Harze. Reaktivverdünner sind die Glycidyläther folgender Alkohole: 1,6-Hexandiol, 1,4-Butandiol, p-tert.-Butylphenol, ortho-Kresol, Phenol und geradkettige Monoalkohole mit mehr als acht Kohlenstoffatomen. Auch feste Epoxidharze, auf Basis der oben genannten Phenole, lassen sich mit der erfindungsgemäßen Härtungskomponente härten, sofern sie in einem geeigneten Lösemittel vorher gelöst werden. Eine ausführliche Aufzählung der geeigneten Epoxidverbindungen findet sich in den Handbüchern 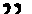 Epoxidverbindungen und Harze" von A.M. Paquin, Springer Verlag, Berlin 1958, Kapitel IV und 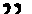 Handbook of Epoxy Resins" von H. Lee und K. Neville, McGraw-Hill Book Company, New York 1982 Reissue, sowie 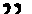 Epoxy Resins - Chemistry and Technology" von C. A. May, Marcel Dekker, Inc. New York and Basel, 1988.

Die erfindungsgemäßen Mischungen können wegen ihrer günstigen Eigenschaften - vor allem der raschen Trocknung auch bei tiefen Temperaturen und auch bei hoher Luftfeuchtigkeit unter Einbau des Härters in das Netzwerk - vielseitige technische Anwendung finden, z.B. zur Herstellung von Formkörpern(Gießharze) für den Werkzeugbau oder zur Herstellung von Überzügen und/oder Zwischenbeschichtungen auf vielerlei Substraten, z.B. auf solchen organischer oder anorganischer Natur, wie Holz, Holzfaserstoffe (Holzversiegelung), Textilien natürlicher oder synthetischer Herkunft, Kunststoffe, Glas, Keramik, Baustoffe, wie Beton, Faserplatten, Kunststeine, insbesondere jedoch auf Metallen wie gegebenenfalls vorbehandelten Stahlblechen, Gußeisen, Aluminium, und Buntmetallen wie Messing, Bronze und Kupfer. Weiterhin können die erfindungsgemäßen Mischungen als Bestandteile von Klebern, Kitten, Laminierharzen, Kunstharzzementen und insbesondere als Bestandteile von Anstrichmitteln und Lacken zum Beschichten von Industriegegenständen, Haushaltsgeräten, Möbeln sowie im Bauwesen, wie z.B. Kühlgeräten, Waschmaschinen, Elektrogeräten, Fenstern, Türen eingesetzt werden. Das Aufbringen kann beispielsweise durch Streichen, Sprühen, Tauchen und dgl. erfolgen.

Ein bevorzugtes Anwendungsgebiet für die erfindungsgemäßen Mischungen sind die Lackzubereitungen.

Die Hartung der erfindungsgemäßen Mischungen läuft sehr rasch ab und erfolgt im Allgemeinen bei -10 °C bis +50 °C, vorzugsweise 0 °C bis 40 °C. Zum Beispiel erhält man bei +5 °C und einer relativen Luftfeuchtigkeit von 95% nach 8 bis 24 Stunden oder bei Raumtemperatur nach 1 bis 4 Stunden bereits Produkte mit guter Härte.

### I. Herstellung der Härtungskomponente (A)

In den nachfolgenden Beispielen bedeuten alle %-Angaben jeweils Massenanteile, soweit nichts anderes angegeben ist. Die Aminzahl, gemessen in mg/g, ist der Quotient derjenigen Masse an Kaliumhydroxid *m*_{KOH}, die ebensoviel Säure zur Neutralisation verbraucht wie eine Masse *m*_{B} eines Stoffes B, und dieser Masse *m*_{B}.

Die gelegentlich noch benutzte Bezeichnung "HAV" ("Wasserstoff-Äquivalentgewicht") ist der Quotient aus der molaren Masse M_{B} eines Stoffes B und der Anzahl der aktiven Wasserstoffatome in einem Molekül dieses Stoffes. Anstelle dieses Wertes zum Gebrauch empfohlen ist sein Kehrwert, der spezifische Gehalt an aktiven Wasserstoffatomen SHG, also die Stoffmenge an aktiven Wasserstoffatomen *n*_{Ha} in der Masse *m*_{B} eines Stoffes, bezogen auf diese Masse des Stoffes *m*_{B}, üblicherweise gemessen in mol/kg. Dieser Wert, die Aminzahl und die Viskosität sind in den nachfolgenden Beispielen immer auf das Gemisch von Härtungskomponente einschließlich Zusatzstoffen bezogen.

### Beispiel 1

Eine Mischung von 330 g Resorcin, 272 g 1,3-Bis-(aminomethyl)-benzol und 2,0 g Natriumsulfit (wasserfrei) wird innerhalb von zwei Stunden auf 220 °C erwärmt und bei dieser Temperatur gehalten. Nach sechs Stunden haben sich 68 g Wasser abgeschieden, nun wird auf 190 °C abgekühlt und während einer Stunde unter vermindertem Druck (5 kPa = 50 mbar) gehalten. Es resultiert ein dunkelroter, bei Raumtemperatur klebfreier Feststoff mit folgenden Werten:

| | |
|---|---|
| GPC (Polystyrolstandard) | gewichtsmittlere molare Masse M_{w} 423 g/mol |
| | zahlenmittlere molare Masse Mₙ 188 g/mol |
| Glastemperatur (DSC-Methode) | 40,2 °C |
| Aminzahl: | 351 mg/g |
| freies Resorcin (HPLC): | 1,9 % |

38,7 g des oben beschriebenen Polymers werden mit 47,3 g 1,3 -Bis-(aminomethyl)-benzol, 11,5 g Benzylalkohol und 2,5 g Octylamin gemischt. Danach ist der Härter gebrauchsfähig.

| | |
|---|---|
| Aminzahl: | 535 mg/g |
| SHG: | 16,7 mol/kg |
| HAV: | 60 g/mol |
| Viskosität bei 23 °C / 25 s⁻¹: | 1230 mPa·s |

### Beispiel 2

330 g Resorcin werden mit 5 g p-Toluolsulfonsäure-Monohydrat auf 130 °C erwärmt. Bei dieser Temperatur werden innerhalb von 30 Minuten 156 g Styrol hinzugefügt. Anschließend wird noch 120 Minuten auf 150 °C erhitzt. Nach dem Abkühlen wird die Schmelze mit 204 g 1,3-Bis-(aminomethyl)-benzol und 79 g Trimethylhexan-1,6-diamin, ein kommerziell erhältliches Gemisch aus 2,2,4-Trimethyl-1,6-diaminohexan und 2,4,4-Trimethyl-1,6-diaminohexan (Hüls AG), aufgenommen. Es werden 50 g ®Solvesso 150 (Exxon Chemical, Gemisch von Alkylaromaten mit einer Siedetemperatur von 150 °C) und 2 g Natriumsulfit hinzugefügt. Am Wasserabscheider wird auf 190 bis 200 °C erwärmt. Nach sechs Stunden haben sich 69 g Wasser abgeschieden, nun wird das Schleppmittel zunächst bei 220 °C, dann bei 190 °C unter vermindertem Druck (bis 5 kPa = 50 mbar) abdestilliert. Zum Schluß wird noch eine Stunde bei dieser Temperatur und diesem Druck gehalten. Es resultiert ein dunkelroter, bei Raumtemperatur klebfreier Feststoff mit folgenden Werten:

| | |
|---|---|
| GPC (Polystyrolstandard) | gewichtsmittlere molare Masse M_{w} 527 g/mol |
| | zahlenmittlere molare Masse Mₙ 218 g/mol |
| Glastemperatur (DSC-Methode) | 45,3 °C |
| Aminzahl: | 322 mg/g |
| freies Resorcin (HPLC): | 1,4 % |

37,3 g des oben beschriebenen Polymers werden mit 49,2 g 1,3-Bis-(aminomethyl)-benzol, 11,7 g 3-Phenylpropan-1-ol und 1,8 g ®Armeen OD (Oleylamin / Akzo Chemicals) vermischt. Danach ist der Härter gebrauchsfähig.

| | |
|---|---|
| Aminzahl: | 530 mg/g |
| SHG | 16,7 mol/kg |
| HAV: | 60 g/mol |
| Viskosität bei 23 °C / 25 s⁻¹: | 1870 mPa·s |

### Beispiel 3

Eine Mischung von 220 g Rescorcin, 131 g Dipropylentriamin, 15 g Xylol und 1 g Natriumdithionit wird am Wasserabscheider auf 190 bis 200 °C erwärmt. Nach fünf Stunden haben sich 34 g Wasser abgeschieden. Das Schleppmittel wird zunächst bei 210 °C und Normaldruck, dann bei 190 °C unter vermindertem Druck (bis 5 kPa = 50 mbar) abdestilliert. Zum Schluß wird noch eine Stunde bei dieser Temperatur und diesem Druck gehalten. Es resultiert ein dunkelbrauner, amorpher Feststoff mit folgenden Werten:

| | |
|---|---|
| GPC (Polystyrolstandard) | gewichtsmittlere molare Masse M_{w} 736 g/mol |
| | zahlenmittlere molare Masse Mₙ 604 g/mol |
| Glastemperatur (DSC-Methode) | 54,8 °C |
| Aminzahl: | 485 mg/g |
| freies Resorcin (HPLC): | 4,6 % |

40,8 g des oben beschriebenen Polymers werden mit 46,7 g 1,3-Bis-(aminomethyl)-benzol, 10,5 g Benzylalkohol und 2,0 g ®Genamin CC 100 D (Gemisch aus C₁₂/C₁₄-Fettamin, Hoechst AG) gemischt. Danach ist der Härter gebrauchsfähig.

| | |
|---|---|
| Aminzahl: | 590 mg/g |
| Viskosität bei 23 °C / 25 s⁻¹: | 1.350 mPa·s |
| SHG | 17,5 mol/kg |
| HAV: | 57 g/mol |

### Beispiel 4

Eine Mischung von 330 g Resorcin, 173 g 4-Aminomethyl-1,8-diaminoactan, 35 g Xylol und 2,1 g Natriumdithionit wird am Wasserabscheider auf 190 bis 200 °C erwärmt. Nach fünf Stunden haben sich 50g Wasser abgeschieden. Das Schleppmittel wird zunächst bei 210 °C und Normaldruck, dann bei 190 °C unter vermindertem Druck (bis 5 kPa = 50 mbar) abdestilliert. Zum Schluß wird noch eine Stunde bei dieser Temperatur und diesem Druck gehalten. Es resultiert ein dunkelbrauner, amorpher Feststoffmit folgenden Werten:

| | |
|---|---|
| GPC (Polystyrolstandard) | gewichtsmittlere molare Masse M_{w} 1605 g/mol |
| | zahlenmittlere molare Masse Mₙ 1051 g/mol |
| Glastemperatur (DSC-Methode) | 50,5 °C |
| Aminzahl: | 311 mg/g |
| freies Resorcin (HPLC): | 3,4 % |

39,3 g des oben beschriebenen Polymers werden mit 32,7 g 1,3-Bis-(aminomethyl)-benzol, 13,5 g Trimethylhexan-1,6-diamin (ein kommerziell erhältliches Gemisch aus 2,2,4-Trimethyl-1,6-diaminohexan und 2,4,4-Trimethyl-1,6-diaminohexan (Hüls AG)), 12,4 g Benzylalkohol und 2,0 g Octylamin gemischt. Danach ist der Härter gebrauchsfähig.

| | |
|---|---|
| Aminzahl: | 497 mg/g |
| SHG | 15,6 mol/kg |
| HAV: | 64 g/mol |
| Viskosität bei 23 °C / 25 s⁻¹: | 2130 mPa·s |

### Vergleichshärter H-V

®Beckopox EH 629, Produkt der Vianova Resins GmbH, Mannichbase aus Phenol, enthält mehr als 10% freies Phenol (SHG = 14,3 mol/kg; HAV = 70 g/mol).

### II. Herstellung der härtbaren Mischungen und anwendungstechnische Prüfung des Härtungsproduktes

Mit den unter I genannten Produkten und Vergleichsprodukten und einem Epoxidharz wurden in folgender Weise Beschichtungen hergestellt, die anwendungstechnisch beurteilt wurden.

100 g ®Beckopox EP 116 (Gemisch aus Bisphenol-A-diglycidyläther und Bisphenol-F-diglycidyläther, spezifischer Epoxidgruppen-Gehalt 5560 mmol/kg; Epoxidäquivalent 180 g/mol mit einer Viskosität von ca. 7,1 Pa·s / 25 °C; Vianova Resins GmbH), wurden mit der dem jeweiligen SHG entsprechenden Menge des jeweiligen Härters gemischt und zwei Filme von 200 µm Dicke aufjeweils zwei Glasplatten aufgezogen. Eine Platte wurde 24 Stunden bei 24 °C und 40 bis 50 % relativer Luftfeuchtigkeit gelagert, die andere Platte wurde 24 Stunden bei +5 °C und ≥ 95% relativer Luftfeuchtigkeit aufbewahrt. Die Filme wurden auf Klebrigkeit, Trübung, Härte und Wasserempfindlichkeit geprüft. Danach wurden die beschichteten Platten 30 Minuten in ein Wasserbad (Wassertemperatur zwischen 10 und 15 °C) gestellt und nach dem Abtrocknen die Veränderung (Trübung) des Filmes, sowie seine Härte beurteilt.

Wie aus der Tabelle ersichtlich ist weisen die mit den erfindungsgemäßen Härtungsmitteln hergestellten Beschichtungen eine einwandfreie Oberflächenbeschaffenheit auf, während bei dem Vergleichsbeispiel eine mehr oder weniger starke Trübung zu beobachten ist. Durch diese Trübung sind weitere Nachteile bedingt, die bei Verwendung des erfindungsgemäßen Härtungsmittels beseitigt werden und deren technischen Fortschritt beweisen. Einmal wird durch die die Trübung hervorrufende Carbonat- bzw. Carbaminatbildung die Zwischenschichthaftung einer weiteren, darauf aufgetragenen Schicht erheblich gestört. Zum anderen ist durch die Carbonat- bzw. Carbaminatbildung die Vernetzungsdichte im gehärteten Film herabgesetzt. Es bilden sich Angriffspunkte für Chemikalien wie verdünnte organische Säuren; die Chemikalienbeständigkeit wird dadurch herabgesetzt.

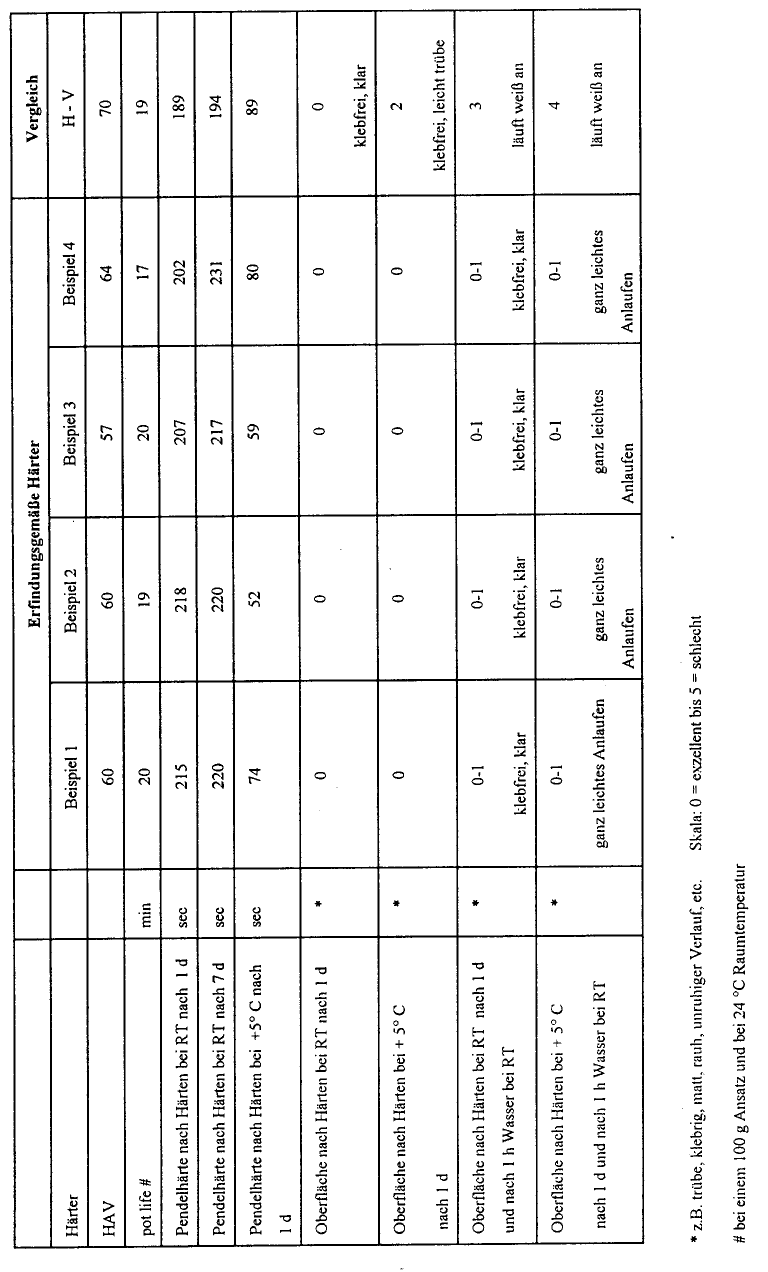

## Patentansprüche

1. Aminogruppenhaltige Härtungskomponente (A) für Epoxidharze (B), dadurch gekennzeichnet, daß die Härtungskomponente (A) ein Kondensationsprodukt aus Di- oder Polyhydroxyaromaten (A1) mit Polyaminen (A2) ist.

2. Aminogruppenhaltige Härtungskomponente nach Anspruch 1, dadurch gekennzeichnet, daß das Stoffmengenverhältnis von (A1) zu (A2) von 10,0 zu 1,0 mol/mol bis 1,0 zu 10,0 mol/mol beträgt.

3. Aminogrupperhaltige Härtungskomponente nach Anspruch 1, dadurch gekennzeichnet, daß das Polyamin (A2) mindestens zwei primäre Aminogruppen aufweist, wobei jede der primären Aminogruppen mit einem aliphatischen Kohlenwasserstoffatom verbunden ist.

4. Aminogruppenhaltige Härtungskomponente nach Anspruch 1, dadurch gekennzeichnet, daß die Komponente (A1) mindestens zwei Hydroxylgruppen aufweist, die jeweils an einen aromatischen Kern gebunden sind.

5. Aminogruppenhaltige Härtungskomponente nach Anspruch 1, dadurch gekennzeichnet, daß die Komponente (A1) zwei oder drei Hydroxylgruppen aufweist.

6. Aminogruppenhaltige Härtungskomponente nach Anspruch 5, dadurch gekennzeichnet, daß die Hydroxylgruppen am selben aromatischen Ring gebunden sind.

7. Aminogruppenhaltige Härtungskomponente nach Anspruch 1, dadurch gekennzeichnet, daß die Komponente (A1) ausgewählt ist aus Resorcin und mindestens einfach substituierten Resorcinen, deren Substituenten ausgewählt sind aus linearen, verzweigten oder cyclischen Alkylgruppen mit 4 bis 16 Kohlenstoffatomen und Aralkylgruppen abgeleitet von Styrol und dessen Homologen wie α-Methylstyrol, den isomeren Vinyltoluolen und deren technischer Mischung, den isomeren Äthylstyrolen, Inden und den halogenierten Styrolen wie Mono- und Dichlorstyrol.

8. Aminogruppenhaltige Härtungskomponente nach Anspruch 1, dadurch gekennzeichnet, daß die Komponente (A1) ausgewählt ist aus Resorcin und styrolisiertem Resorcin sowie deren Mischungen.

9. Aminogruppenhaltige Härtungskomponente nach Anspruch 1, dadurch gekennzeichnet, daß als Komponente (A2) diprimäre Amine eingesetzt werden.

10. Aminogruppenhaltige Härtungskomponente nach Anspruch 1, dadurch gekennzeichnet, daß die Amine der Komponente (A2) 2 bis 40 Kohlenstoffatome aufweisen.

11. Aminogruppenhaltige Härtungskomponente nach Anspruch 1, dadurch gekennzeichnet, daß die Amine der Komponente (A2) ausgewählt sind aus Polyoxyalkylen-Polyaminen und Polyiminoalkylen-Polyaminen mit 2 bis 4 Kohlenstoffatomen in der Alkylengruppe, und einen zahlenmittleren Polymerisationsgrad von 2 bis 100 aufweisen.

12. Aminogruppenhaltige Härtungskomponente nach Anspruch 1, dadurch gekennzeichnet, daß die Amine der Komponente (A2) ausgewählt sind aus linearen, verzweigten und cyclischen aliphatischen primären Diaminoalkanen mit 2 bis 40 Kohlenstoffatomen.

13. Aminogruppenhaltige Härtungskomponente nach Anspruch 1, dadurch gekennzeichnet, daß die Amine der Komponente (A2) ausgewählt sind aus araliphatischen Aminen mit mindestens zwei primären Aminogruppen, die jeweils an einem aliphatischen Kohlenstoffatom gebunden sind.

14. Verfahren zur Herstellung von aminogruppenhaltigen Härtungskomponenten nach Anspruch 1, dadurch gekennzeichnet, daß ein Gemisch aus den Komponenten (A1) und (A2) auf eine Reaktionstemperatur von 150 bis 230 °C erwärmt wird, wobei das in der Reaktion gebildete Wasser durch Destillation entfernt wird.

15. Verfahren nach Anspruch 14, dadurch gekennzeichnet, daß zusätzlich ein Schleppmittel eingesetzt wird, das mit Wasser ein Azeotrop bildet.

16. Verfahren nach Anspruch 14, dadurch gekennzeichnet, daß zusätzlich ein Katalysator eingesetzt wird ausgewählt aus Alkali- und Erdalkali-Sulfiten und -Dithioniten, Borsäure, aromatischen Sulfonsäuren, Oxalsäure, und Kombinationen von (i) Salzen von aliphatischen Carbonsäuren ausgewählt aus olefinisch ungesättigten und gesättigten linearen, verzweigten und cyclischen Mono- und Di-Carbonsäuren mit 2 bis 40 Kohlenstoffatomen mit (ii) Schwermetallen ausgewählt aus Eisen, Kobalt, Zinn, Zink, Mangan, Kupfer und Vanadium.

17. Verfahren nach Anspruch 14, dadurch gekennzeichnet, daß der Katalysator in einem Massenanteil von 0,1 bis 5 % eingesetzt wird, bezogen auf die Masse der Mischung aus den Komponenten (A1) und (A2).

18. Verfahren nach Anspruch 14, dadurch gekennzeichnet, daß das Schleppmittel in einem Massenverhältnis von 0,1 g : 1 g bis 10 g : 1 g eingesetzt wird, bezogen auf die Masse der Mischung aus den Komponenten (A1) und (A2).

19. Verwendung der Härtungskomponente (A) gemäß Anspruch 1 gemeinsam mit Epoxidharzen (B) zur Herstellung von härtbaren Mischungen (C).

20. Härtbare Mischung (C) gemäß Anspruch 19, dadurch gekennzeichnet, daß sie Massenanteile von 5 bis 90 % einer Härtungskomponente (A) und 10 bis 95 % eines Epoxidharzes (B) enthält.

21. Härtbare Mischung (C) gemäß Anspruch 20, dadurch gekennzeichnet, daß sie zusätzlich Massenanteile von 5 bis 90 %, bezogen auf die Summe der Massen der Komponenten (A), (B) und (F), eines Polyamins (F) enthält, das denselben Bedingungen wie die Komponente (A2) genügt.

22. Härtbare Mischung (C) gemäß Anspruch 20, dadurch gekennzeichnet daß das Amin (F) 1,3-Bis-(aminomethyl)-benzol ist.

23. Härtbare Mischung (C) gemäß Anspruch 20, dadurch gekennzeichnet, daß das Amin (F) Trimethylhexan-1,6-diamin ist.
